# EUROPEAN PATENT SPECIFICATION

(11) **EP 2 299 172 B1**
(45) Date of publication and mention of the grant of the patent: **24.10.2018**
(21) Application number: 10176377.9
(22) Date of filing: 13.09.2010
(51) Int. Cl.: F21V 31/03, B62J 6/02, B60Q 1/34

(54) **Tail lamp unit**
Heckleuchteneinheit
Unité de lampe arrière

(30) Priority: 15.09.2009 JP 2009213166
(43) Date of publication of application: 23.03.2011
(73) Proprietor: Honda Motor Co., Ltd., Tokyo 107-8556 (JP)
(72) Inventor: Inose, Koji, Saitama 351-0193 (JP); Mori, Kazuhiko, Saitama 351-0193 (JP); Takimoto, Sachiko, Saitama 351-0193 (JP)
(74) Representative: Beder, Jens

(56) References cited:
- US-A- 4 862 337
- US-A- 5 010 453
- US-A1- 2008 205 073

## Description

This invention relates to a tail lamp unit fitted to the back part of a vehicle.

The back part of a saddle-ride type vehicle is, for example, provided with a tail lamp unit including a tail lamp and a winker lamp (for example, see Patent Literature 1 (Fig. 3)).

JP-A No. 2007-149536 will be described according to the following drawing.

As shown in Fig. 3 of the patent literature 1, a tail lamp unit (20) (a bracketed numeral indicates a reference sign mentioned in the patent literature 1. The same shall apply hereinafter.) includes a tail lamp part (21) provided with a tail lamp (26), winker lamp parts (22), (22) provided on the sides of the tail lamp part (21) and provided with winker lamps (35), (35), a tail lamp lens (31) put over the tail lamp (26), winker lamp lenses (39), (39) put over the winker lamps (35), (35), and vent holes (55), (55) communicated with the outside from the tail lamp part (21) for ventilation.

Incidentally, an area covered with the tail lamp lens (31) is full of heat generated from the tail lamp (26). The tail lamp lens (31) is liable to cloud up due to the heat working inside. The vent holes (55), (55) are provided not to cause a temperature difference from the outside, whereby the tail lamp lens (31) is prevented from clouding up.

In the thus constructed tail lamp unit (20), however, since the vent holes (55), (55) are formed in the reflector surface (27), probably the vent holes (55), (55) are seen through the tail lamp lens 31, and there is room for improvement in appearance. In the case where the vent holes (55), (55) are formed in the reflector surface (27), the problem is that the effective reflection area of the reflector is decreased.

Documents US 5 010 453 and US 4 862 337 also describe this construction. Therefore, it is desirable to provide a tail lamp unit, which attains compatibility between functionality and appearance.

It is an object of the present invention to provide a tail lamp unit having high functionality and appearance.

The invention of claim 1 is characterized in that a tail lamp unit includes: a base member (50) including a partition part (35) partitioning between a tail lump housing part (42) storing a tail lamp (41) and right and left winker lamp housing parts (44) provided on both sides of the tail lamp housing part (42) to store winker lamps (43); a tail lens (46) covering the tail lamp housing part (42); and a winker lens (47) covering the winker lamp housing part (44), wherein the winker lens 47 is joined to the tail lens (46) through a fitting part (51), a predetermined gap (38) is formed between the joint part (52) and the partition part (35), and the partition part (35) opposite to the joint part (52) is provided with a vent hole (66) communicating the interiors of the tail lamp housing part (42) and the winker housing part (44) with the outside.

The invention of claim 2 is characterized in that in the base member (50), a recessed part (53) is formed in the partition part (35) opposite to the joint part (52), the joint part (52) is disposed with the tip of the joint part (52) facing the recessed part (53), and the vent hole (66) is provided in a base (88) of the recessed part (53).

The invention of claim 3 is characterized in that the recessed part (53) is formed extending over the whole of the partition part (35) opposite to the joint part (52).

The invention of claim 4 is characterized in that an axis (111) of the vent hole (66) is parallel to a longitudinal axis (112) of a vehicle when the vehicle is viewed in a plane, and the base (88) of the recessed part (53) provided with the vent hole (66) is inclined to the longitudinal axis (112) when the vehicle is viewed in a plane.

The invention of claim 5 is characterized in that the recessed part (53) is formed extending upward and downward, and the vent hole (66) is provided above the middle in a height direction of the recessed part (53).

The invention of claim 6 is characterized in that the recessed part (53) presents an L-shape including a longitudinal groove part (77) and a lateral groove part (78) extended from an upper end of the longitudinal groove part (77) when viewed from the rear of the vehicle, and the vent hole (66) is provided in the lateral groove part (78).

The invention of claim 7 is characterized in that the tail lamp housing part (42) includes an extending part (67) extended along the top face of the winker lamp housing part (44), and in the base member (50), the extending part (67) is provided with the vent hole (66).

According to the invention of claim 1, in the partition part opposite to the joint part where the winker lens and the tail lens are put together, the base member is provided with the vent holes each communicating the interiors of the tail lamp housing part and the winker lamp housing part with the outside. When the tail lamp unit is viewed from the rear of the vehicle, the joint part is put on the vent hole so that the vent hole is hardly shown on the outward appearance. Thus, the appearance of the tail lamp unit is improved. Further, since the partition part is provided with the vent hole, the effective reflection area of a reflector will not be decreased.

Moreover, according to the invention of claim 1, the gap is provided between a lens joint part and the partition part, and the vent hole is provided to communicate the interiors of the tail lamp housing part and the winker housing part with the outside. That is, the tail lamp housing part and the winker lamp housing part are not individually provided with a vent hole, but the partition part is provided with the vent hole common thereto. The common vent hole is thus provided to decrease the number of holes to be bored, so that the production efficiency of the tail lamp unit can be heightened.

According to the invention of claim 2, the vent hole is provided in the base of the recessed part. The vent hole is provided in the base of the recessed part, whereby the vent hole is hardly shown on the outward appearance. Further, the appearance of the tail lamp is improved.

According to the invention of claim 3, the recessed part is formed extending over the whole of the partition part opposite to the joint part. The recessed part is formed extending over the whole of the partition part, whereby a place to bore the vent hole can be widened. That is, the degree of freedom in design can be heightened, so it is preferable.

In addition, according to the invention of claim 3, the recessed part is formed extending over the whole of the partition part opposite to the joint part. The joint part is disposed to face the recessed part. Thus, light leakage of the tail lamp to the winker lamp side and light leakage of the winker lamp to the tail lamp side can be prevented.

According to the invention of claim 4, the axis of the vent hole is parallel to the longitudinal axis of the vehicle when the vehicle is viewed in a plane, and the base of the recessed part provided with the vent hole is inclined to the longitudinal axis when the vehicle is viewed in a plane. The vent hole is thus bored in the inclined base, so that an inlet (an opening) of the vent hole is elliptic. As compared with the case where the vent hole is formed to be circular, an opening area can be enlarged to improve the ventilation.

According to the invention of claim 5, the recessed part is formed extending upward and downward, and the vent hole is provided above the middle in the height direction of the recessed part. The vent hole is thus provided at the higher position, whereby entering of mud and water raised by a rear wheel can be prevented.

According to the invention of claim 6, the lateral groove part is extended from the upper end of the longitudinal groove part, and the vent hole is provided in the lateral groove part, whereby entering of mud and water raised by the rear wheel can be prevented.

According to the invention of claim 7, in the base member, the extending part is provided with the vent hole. The extending part is kept away from the tail lamp and the winker lamp. The vent hole is provided at a position, which the heat of the lamp hardly reaches, whereby air having temperature closer to that of the outside can be supplied to prevent the lens from clouding up.

### [Brief Description of the Drawings]

Fig. 1 is a side view of a saddle-ride type vehicle loaded with a tail lamp unit according to the present invention.
Fig. 2 is a sectional view of the tail lamp unit according to the present invention.
Fig. 3 is a view taken from an arrow 3 of Fig. 1.
[Fig. 4 is a diagram for explaining a base member of the tail lamp unit.
Fig. 5 is a back view of the tail lamp unit according to the present invention.
Fig. 6 is a sectional view taken along line 6-6 of Fig. 3.
Fig. 7 is a sectional view taken along line 7-7 of Fig. 4.
Fig. 8 is a side view of the base member.

The embodiment of the invention will now be described according to the attached drawings. The drawings should be viewed in the direction of the reference signs.

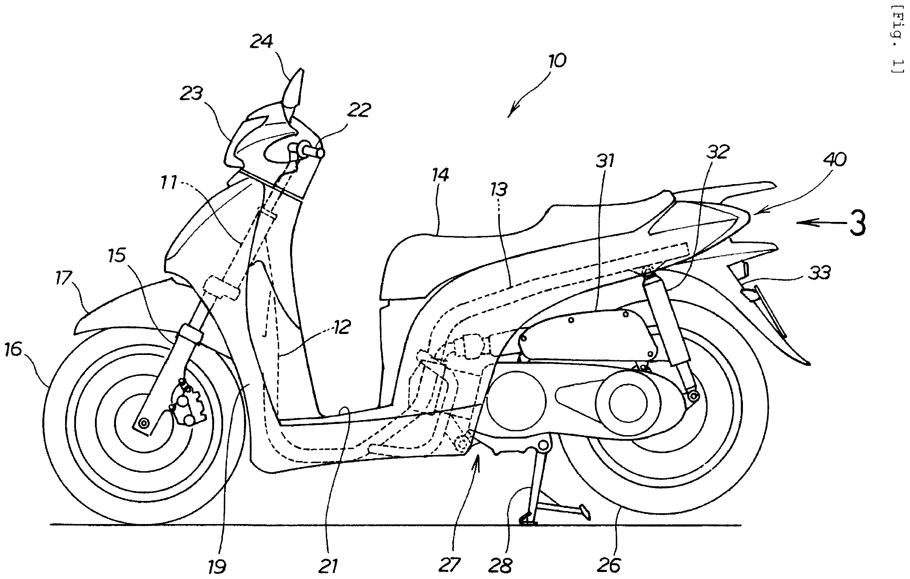

As shown in Fig. 1, a saddle-ride type vehicle 10 includes: a head pipe 11; a main frame 12, which is connected to the head pipe 11 and formed substantially U-shaped when the vehicle is viewed from the side; a seat rail 13 extended backward from the rear end of the main frame 12; a seat 14, which is placed on the seat rail 13, and on which an occupant is seated; a front fork 15 fitted to the head pipe 11 to be freely steered; a front wheel 16 rotatably fitted to the lower end of the front fork 15; a front fender 17 fitted to the front fork 15 to interrupt mud and stone splashed by the front wheel 16; a leg shield 19 disposed at the back of the front fender 17 to cover the fronts of occupant's legs; a step floor 21 connected to the lower end of the leg shield 19 to place the occupant's legs thereon; a handlebar 22 disposed on the top of the head pipe 11 to operate a vehicle body; a headlight 23 disposed in front of the handlebar 22 to illuminate ahead of the vehicle; a side mirror 24 provided at the back of the headlight 23 and above the handlebar 22; an engine unit 27 supported below the seat 14 to freely swing for driving a rear wheel 26; a main stand 28 supported by the lower part of the engine unit 27 to support the vehicle body in parking; an air cleaner 31 disposed above the engine unit 27 for intake of the engine; a rear suspension 32 extended from the rear end of the engine unit 27 toward the lower surface of the seat 14; a rear fender 33 provided to cover the rear wheel 26 to interrupt mud and stone splashed by the rear wheel 26; and a tail lamp unit 40 provided above the rear fender 33.

The tail lamp unit 40 used in the thus constructed saddle-ride type vehicle 10 will be described in detail according to the following drawings.

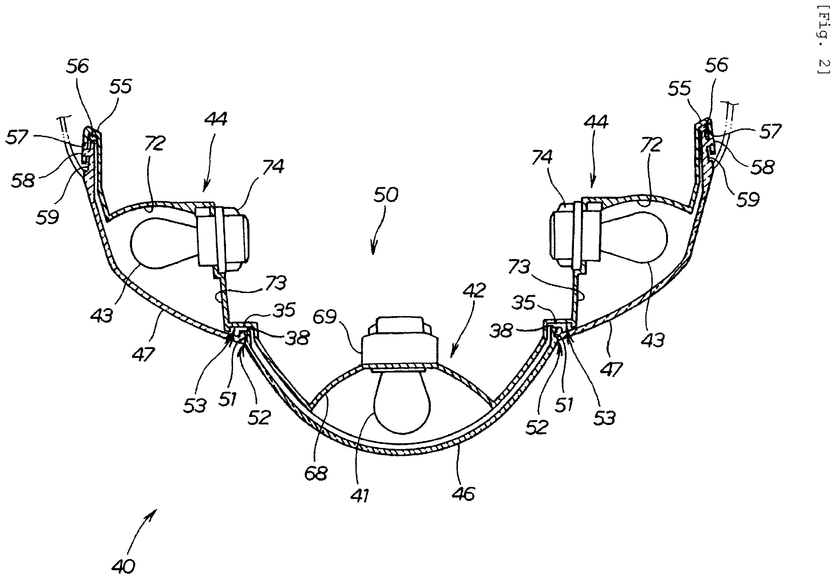

The tail lamp unit 40, as shown in Fig. 2, includes: a tail lamp housing part 42 storing a tail lamp 41; right and left winker lamp housing parts 44, 44 provided at both sides of the tail lamp housing part 42 to store the winker lamps 43, 43; a tail lens 46 covering the tail lamp housing part 42; and winker lenses 47, 47 covering the winker lamp housing parts 44, 44.

The tail lamp housing part 42 and the winker lamp housing parts 44, 44 are integrally formed to constitute a base member 50.

The winker lenses 47, 47 are formed integral with the tail lens 46 through fitting parts 51, 51 to constitute a joint part 52.

The joint part 52 is disposed to face a recessed part 53 provided along a partition part 35 partitioning between the tail lamp housing part 42 and the winker lamp housing parts 44, 44.

The recessed part 53 is provided extending over the whole of the partition part 35 partitioning between the tail lamp housing part 42 and the winker lamp housing parts 44, 44, whereby light leakage of the tail lamp 41 to the winker lamp 43 side and light leakage of the winker lamp 43 to the tail lamp 41 side can be prevented.

The winker lamp housing part 44 is provided with a mounting groove 55 for mounting the winker lens 47, a sealing material 56 is disposed at the base of the mounting groove 55, and an engagement hole 57 for the winker lens is provided in the middle of the mounting groove 55.

On the other hand, the winker lens 47 is provided with a claw part 58 engaging with the engagement hole 57.

The winker lens 47 is pushed in against the force of the sealing material 56, and when the claw part 58 enters the hole 57, the winker lens 47 is released. The winker lens 47 is pushed back with the force of the sealing material 56, and the claw part 58 is caught in the hole 57, so that the winker lens 47 is disposed. The sealing material 56 disposed at the base prevents entering of dust or the like.

The outer peripheral surface of the winker lens 47 is provided with a storing recessed part 59 storing the outer peripheral part of the winker lamp housing part 44. When the tail lamp unit 40 is mounted to the vehicle body, the outer peripheral part of the winker lamp housing part 44 is stored in the storing recessed part 59. The lamp housing part 44 is not shown on the outward appearance of the vehicle body so that the appearance of the tail lamp unit 40 is improved.

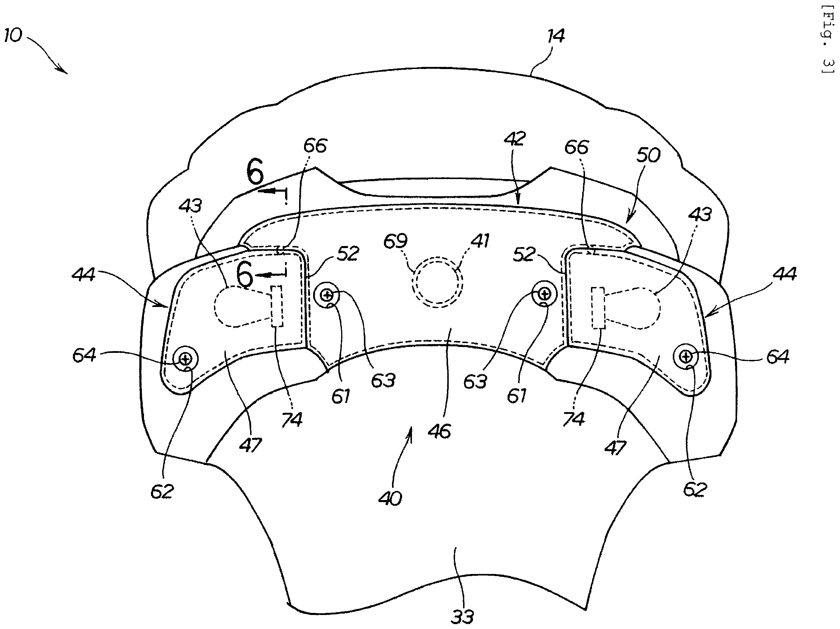

As shown in Fig. 3, the joined tail lens 46 and winker lenses 47, 47 are fixed to the base member 50 by passing screws 63, 63, 64, 64 through fitting parts 61, 61, 62, 62, respectively.

Vent holes 66 are provided in the base member 50 at the partition parts (the reference sign 35 in Fig. 2) opposite to the joint parts 52, 52 where the winker lenses 47, 47 and the tail lens 46 are put together. The vent holes 66 communicate the interiors of the tail lamp housing part 42 and the winker lamp housing parts 44, 44 with the outsides thereof.

When viewing the tail lamp unit 40 from the rear of the vehicle, the joint parts 52 are put on the vent hole 66s so that the vent hole 66s are hardly shown on the outward appearance. Thus, the appearance of the tail lamp unit 40 is improved.

The details of the vent holes 66 will be described in the following.

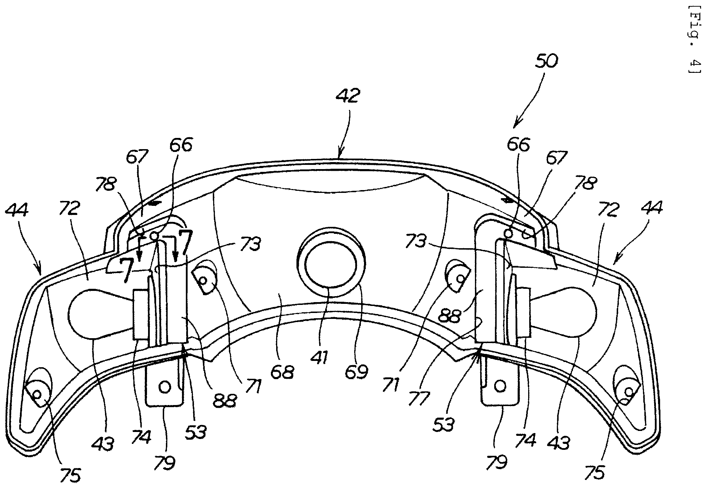

As shown in Fig. 4, the tail lamp housing part 42 is formed substantially like a T-shape including extending parts 67, 67 extended along the upsides of the winker lamp housing parts 44, 44. The middle of the tail lamp housing part 42 is recessed to form a tail lamp reflector 68 reflecting the light of the tail lamp 41. The tail lamp 41 is supported on a tail lamp socket 69 provided at the center of the tail lamp reflector 68.

Fitted parts 71, 71 where the fitting parts (the reference sign 61 in Fig. 3) are superposed and the screws (the reference sign 63 in Fig. 3) are passed are provided at the side of the tail lamp reflector 68.

The winker housing parts 44, 44 include: winker lamp reflectors 72, 72 reflecting the light of the winker lamps 43, 43; winker lamp sockets 74, 74 provided on longitudinal walls 73, 73 to support the winker lamps 43, 43; and fitted parts 75, 75 where the fitting parts (the reference sign 62 in Fig. 3) are superposed and the screws (the reference sign 64 in Fig. 3) are passed.

A groove-like recessed part 53 is formed along a boundary between the thus constructed tail lamp housing part 42 and winker lamp housing parts 44, 44.

The recessed part 53 presents an L-shape including a longitudinal groove part 77 and a lateral groove part 78 extended from the upper end of the longitudinal groove part 77 and formed on a part of the extending part 67 when viewed from the rear of the vehicle, and the vent hole 66 is provided in the lateral groove part 78.

The lateral groove part 78 is extended from the upper end of the longitudinal groove 77, and the lateral groove part 78 is provided with the vent hole 66. The vent hole 66 is provided at a higher position, whereby entering of mud and water raised by the rear wheel (the reference sign 26 in Fig. 1) can be prevented.

The extending part 67 is kept away from the tail lamp 41 and the winker lamps 43, 43. The vent hole 66 is provided at a position which heat of the lamps 41, 43, 43 hardly reaches, whereby the air having temperature closer to that of the outside can be supplied to prevent the lenses (the reference sings 46, 47 in Fig. 2) from clouding up.

The joint part (the reference sign 52 in Fig. 2) is put on the recessed part 53.

In the base member 50, the recessed part 53 is formed extending over the whole partition part opposite to the joint part, and the base 88 of the recessed part 53 is provided with the vent hole 66.

The recessed part 53 is formed extending over the whole, whereby a place to bore the vent hole 66 can be widened. That is, the degree of freedom in design can be heightened, so it is preferable.

Rectangular mounting brackets 79, 79 for mounting the base member 50 to the vehicle body are provided at the lower part of the base member 50.

In the case where the tail lamp housing part 42 is substantially quadrangle and has no extending part, or the recessed part 53 is formed on a part of the partition part opposite to the joint part, the recessed part 53 may be formed like an I-shape composed of the longitudinal groove 77 only.

In this case, the vent hole 66 is preferably provided above the middle in the height direction of the recessed part 53 formed extending upward and downward.

The vent hole is provided at a higher position, whereby entering of mud and water raised by the rear wheel can be prevented.

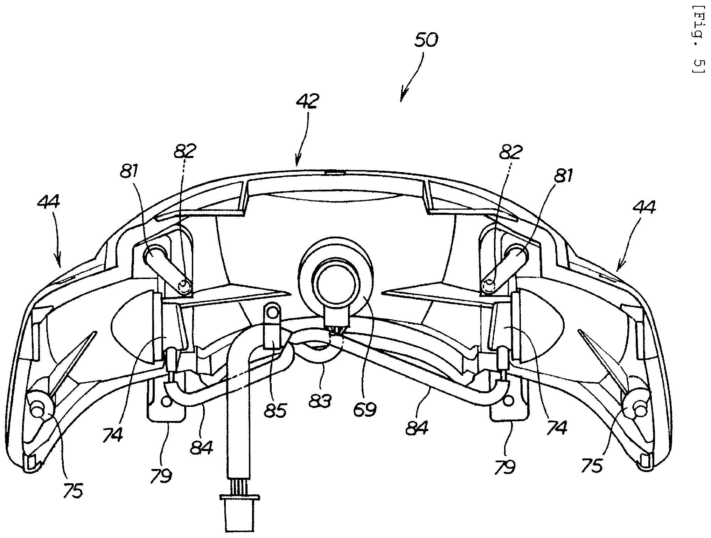

As shown in Fig. 5, the back of the base member 50 is provided with ventilation pipes 81, 81. The ventilation pipe 81 is connected to the vent hole (the reference sign 66 in Fig. 3) to discharge the heat generated by the tail lamp and the winker lamp (the reference sign 41, 43 in Fig. 3) to the outside. The heat generated by the lamp is discharged to the outside from the opening parts 82, 82 of the ventilation pipes 81, 81.

The ventilation pipes 81, 81 are provided so that opening parts 82, 82 are opposite to the back of the base member 50. As compared with the case where the opening part 82 is provided to point to the front of the vehicle body (the surface side in drawing), the back of the base member 50 functions as a wall to thereby prevent entering of mud and water raised by the rear wheel (the reference sign 26 in Fig. 1).

A conductive line 83 connected to the tail lamp socket 69 and conductive lines 84, 84 connected to the winker lamp sockets 74, 74 are bundled by a clip 85.

The structure in the vicinity of the vent hole (the reference sign 66 in Fig. 3) will be further described.

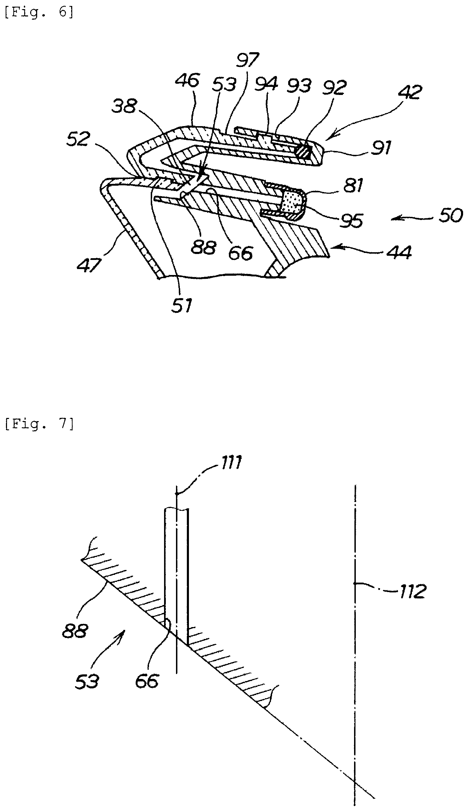

As shown in Fig. 6, the winker lens 47 is connected to the tail lens 46 through the fitting part 51, the base member 50 is provided with the recessed part 53 formed in the partition part opposite to the joint part 52, the joint part 52 is disposed with the tip of the joint part 52 facing the recessed part 53, and the vent hole 66 is provided at the base 88 of the recessed part 53.

The tail lamp housing part 42 is provided with a mounting groove part 91 for mounting the tail lens 46, a sealing material 92 is disposed at the base of the mounting groove part 91, and an engagement hole 93 is provided in the middle of the mounting groove part 91.

On the other hand, the tail lens 46 is provided with a claw part 94.

The tip of the tail lens 46 is pushed into the sealing material 92, and when the claw part 94 enters the engagement hole 93, the tail lens 46 is released. The tail lens 46 is pushed back by the force of the sealing material 92, and the claw part 94 is caught in the engagement hole 93 to dispose the tail lens 46. The sealing material 92 disposed at the base can prevent entering of dust or the like.

A sponge 95 as a filter is disposed at the outer end of the vent hole 66, and the sponge 95 is held between the end of the vent hole 66 and the ventilation pipe 81.

A gap 38 is provided between the joint part 52 and the partition part 38, and while the tail lamp housing part 42 and the winker lamp housing part 44 are not individually provided with the vent hole 66, they are provided with the common vent hole 66. The vent hole 66 is common to the housing parts, whereby the number of vent holes 66 to be bored can be decreased so that the production efficiency of the tail lamp unit can be heightened.

The vent hole 66 is provided at the base 88 of the recessed part 53, whereby the vent hole 66 is further hardly shown on the outward appearance (See Fig. 3). The appearance of the tail lamp unit 40 is further improved.

Since the vent hole 66 is provided in the partition part, the effective reflecting area of the reflector is not reduced. That is, high functionality can be secured.

The outer peripheral surface of the tail lens 46 is provided with a storing recessed part 97 storing the outer peripheral part of the tail lamp housing part 42. When the tail lamp unit is mounted to the vehicle body, the outer peripheral part of the tail lamp housing part 42 is stored in the storing recessed part 97. The tail lamp housing part 42 is not shown on the outward appearance of the vehicle body (See Fig. 3), so that the appearance of the tail lamp unit can be improved.

The details of the arrangement position of the vent hole 66 will be described in the following drawing.

As shown in Fig. 7, the axis 111 of the vent hole 66 is parallel to the longitudinal axis 112 of the vehicle when the vehicle is viewed in a plane, and the base 88 of the recessed part 53 where the vent hole 66 is provided is inclined to the longitudinal axis 112 when the vehicle is viewed in a plane.

The effect produced by providing the vent hole 66 in such an inclined surface will be described in the following drawing.

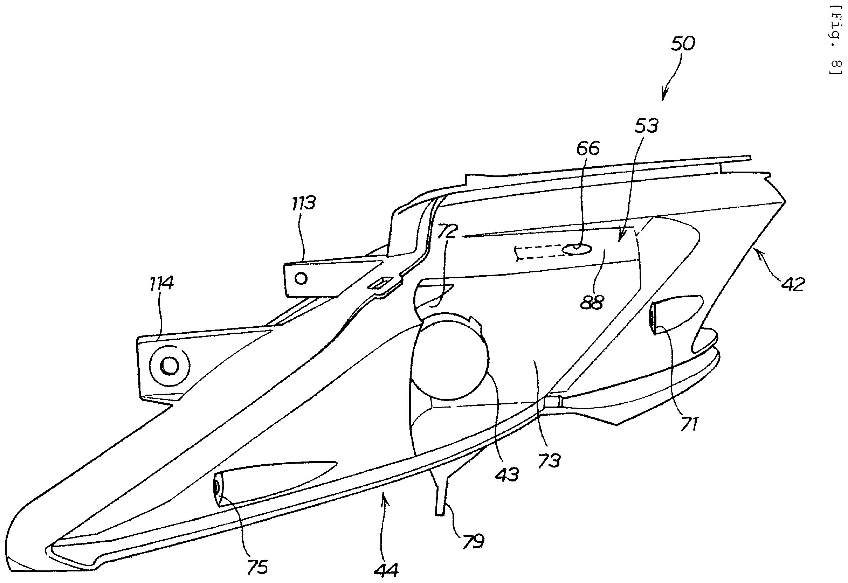

As shown in Fig. 8, the vent hole 66 is provided in an inclined region, whereby the vent hole 66 is formed elliptical in the base 88 of the recessed part 53. As compared with the circular hole, an opening area can be enlarged to heighten ventilation.

The winker lamp housing part 44 is also provided with brackets 113, 114 for mounting the base member 50 to the vehicle body.

Although the tail lamp unit according to the present invention is applied to a two-wheeled vehicle, it may be applied to a three-wheeled vehicle, and it may as well be applied to the other saddle-ride type vehicles.

The tail lamp unit of the present invention is preferable for the two-wheeled vehicle.

Reference Signs List

- 35: Partition part
- 38: Gap
- 40: Tail lamp unit
- 41: Tail lamp
- 42: Tail lamp housing part
- 43: Winker lamp
- 44: Winker lamp housing part
- 46: Tail lens
- 47: Winker lens
- 50: Base member
- 51: Fitting part
- 52: Joint part
- 53: Recessed part
- 66: Vent hole
- 67: Extending part
- 77: Longitudinal groove part
- 78: Lateral groove part
- 88: Base
- 111: Axis
- 112: Longitudinal axis

## Claims

1. A tail lamp unit for a saddle-ride type vehicle, comprising:
a base member (50) including a partition part (35) partitioning between the tail lamp reflector (68) of a tail lamp housing part (42) storing a tail lamp (41) and winker lamp reflectors (72) of right and left winker lamp housing parts (44) provided on both sides of the tail lamp housing part (42) to store winker lamps (43);
a tail lens (46) covering the tail lamp housing part (42); and
a winker lens (47) covering the winker lamp housing part (44),
wherein: the winker lens (47) is formed integral with the tail lens (46) through a fitting part (51) to constitute a joint part (52), a predetermined gap (38) is formed between the joint part (52) and the partition part (35); and
the partition part (35) opposite to the joint part (52) is provided with a vent hole (66) communicating the interiors of the tail lamp housing part (42) and the winker housing part (44) with the outside.

2. The tail lamp unit according to claim 1,
wherein: in the base member (50), a recessed part (53) is formed in the partition part (35) opposite to the joint part (52), the joint part (52) being disposed with the tip of the joint part (52) facing the recessed part (53); and
the vent hole (66) is provided in a base (88) of the recessed part (53).

3. The tail lamp unit according to claim 2, wherein the recessed part (53) is formed extending over the whole of the partition part (35) opposite to the joint part (52).

4. The tail lamp unit according to claim 2 or claim 3, wherein an axis (111) of the vent hole (66) is parallel to a longitudinal axis (112) of a vehicle when the vehicle is viewed in a plane, and the base (88) of the recessed part (53) provided with the vent hole (66) is inclined to the longitudinal axis (112) when the vehicle is viewed in a plane.

5. The tail lamp unit according to claim 2, claim 3 or claim 4, wherein the recessed part (53) is formed extending upward and downward, and the vent hole (66) is provided above the middle in a height direction of the recessed part (53).

6. The tail lamp unit according to any of claims 2 to 4, wherein the recessed part (53) presents an L-shape including a longitudinal groove part (77) and a lateral groove part (78) extended from an upper end of the longitudinal groove part (77) when viewed from the rear of the vehicle, and the vent hole (66) is provided in the lateral groove part (78).

7. The tail lamp unit according to one of claims 1 to 4,
wherein: the tail lamp housing part (42) includes an extending part (67) extended along the top face of the winker lamp housing part (44); and
in the base member (50), the extending part (67) is provided with the vent hole (66).

## Patentansprüche

1. Rückleuchteneinheit für ein Fahrzeug vom Sattelfahrtyp, umfassend:
ein Grundelement (50), das ein Trennteil aufweist (35), welches einen Rückleuchten-Reflektor (68) eines Rückleuchten-Gehäuseteils (42), in dem eine Rückleuchte (41) untergebracht ist, und Blinkleuchten-Reflektoren (72) eines rechten und eines linken Blinkleuchten-Gehäuseteils (44) abtrennt, welche an beiden Seiten des Rückleuchten-Gehäuseteils (42) vorgesehen sind um Blinkleuchten (43) unterzubringen;
eine Rücklichtlinse (46), welche das Rückleuchten-Gehäuseteil (42) abdeckt und
eine Blinklichtlinse (47), welche das Blinkleuchten-Gehäuseteil (44) abdeckt, wobei die Blinklichtlinse (47) einstückig mit der Rücklichtlinse (46) durch ein Anpassteil (51) gebildet wird, um ein verbundenes Teil (52) zu bilden,
eine vorbestimmte Lücke (38) zwischen dem verbundenen Teil (52) und dem Trennteil (35) gebildet ist; und
das Trennteil (35) gegenüberliegend zu dem verbundenen Teil (52) mit einem Lüftungsloch (66) versehen ist, das zwischen den Innenseiten des Rückleuchten-Gehäuseteils (43) und des Blinkleuchten-Gehäuseteils (44) mit der Außenseite in Verbindung steht.

2. Rückleuchteneinheit gemäß Anspruch 1,
wobei in dem Grundteil (50) ein ausgenommener Teil (53) in dem Trennteil (35) gebildet ist, gegenüberliegend zu dem verbundenen Teil (52), wobei das verbundene Teil (52) mit der Spitze des verbundenen Teils (52) so angeordnet ist, dass es dem ausgenommenen Teil (53) zugewandt ist; und
das Lüftungsloch (66) in einem Grundelement (88) des ausgenommenen Teils (53) vorgesehen ist.

3. Rückleuchteneinheit gemäß Anspruch 2, wobei der ausgenommene Teil (53) so gebildet ist, dass er sich über das ganze Trennteil (35) erstreckt, das dem verbundenen Teil (52) gegenüberliegt.

4. Rückleuchteneinheit gemäß Anspruch 2 oder Anspruch 3, wobei eine Achse (111) des Lüftungslochs (66) parallel zu einer Längsachse (112) des Fahrzeugs ist, wenn das Fahrzeug in einer Ebene betrachtet wird, und wobei das Grundelement (88) des ausgenommenen Teils (53), das mit dem Lüftungsloch (66) versehen ist, gegenüber der Längsachse (112) geneigt ist, wenn das Fahrzeug in einer Ebene betrachtet wird.

5. Rückleuchteneinheit gemäß Anspruch 2, Anspruch 3 oder Anspruch 4, wobei das ausgenommene Teil (53) so gebildet ist, dass es sich nach oben und unten erstreckt, und wobei das Lüftungsloch (66) über der Mitte in einer Höhenrichtung des ausgenommenen Teils (53) vorgesehen ist.

6. Rückleuchteneinheit gemäß einem der Ansprüche 2 bis 4, wobei das ausgenommene Teil (53) eine L-Form zeigt, die einen längs verlaufenden Nutenteil (77) und einen seitlichen Nutenteil (78) aufweist, welcher sich von einem oberen Ende des längs verlaufenden Nutenteils (77) erstreckt, wenn es von der Rückseite des Fahrzeugs betrachtet wird, und wobei das Lüftungsloch (66) in dem seitlichen Nutenteil (78) vorgesehen ist.

7. Rückleuchteneinheit gemäß einem der Ansprüche 1 bis 4, wobei das Rückleuchten-Gehäuseteil (42) ein erweitertes Teil (67) hat, welches sich entlang einer oberen Fläche des Blinkleuchten-Gehäuseteils (44) erstreckt; und in dem Grundelement (50) das erweiterte Teil (67) mit dem Lüftungsloch (66) versehen ist.

## Revendications

1. Unité de lampe arrière pour un véhicule de type à selle, comprenant :
un élément de base (50) comprenant une partie de séparation (35) se partageant entre le réflecteur de lampe arrière (68) d'une partie de logement de lampe arrière (42) stockant une lampe arrière (41) et des réflecteurs de lampe de clignotant (72) de parties de logement de lampe de clignotant droit et gauche (44) prévues des deux côtés de la partie de logement de lampe arrière (42) pour stocker les lampes de clignotant (43) ;
une lentille arrière (46) recouvrant la partie de logement de lampe arrière (42) ; et
une lentille de clignotant (47) recouvrant la partie de logement de lampe de clignotant (44),
dans laquelle :
la lentille de clignotant (47) est formée de manière solidaire avec la lentille arrière (46) par le biais d'une partie de montage (51) afin de constituer une partie de joint (52),
un espace (38) prédéterminé est formé entre la partie de joint (52) et la partie de séparation (35) ; et
la partie de séparation (35) opposée à la partie de joint (52) est prévue avec un trou d'évent (66) faisant communiquer les intérieurs de la partie de logement de lampe arrière (42) et la partie de logement de clignotant (44) avec l'extérieur.

2. Unité de lampe arrière selon la revendication 1,
dans laquelle : dans l'élément de base (50), une partie évidée (53) est formée dans la partie de séparation (35) opposée à la partie de joint (52), la partie de joint (52) étant disposée avec la pointe de la partie de joint (52) qui fait face à la partie évidée (53) ; et
le trou d'évent (66) est prévu dans une base (88) de la partie évidée (53).

3. Unité de lampe arrière selon la revendication 2, dans laquelle la partie évidée (53) est formée en s'étendant sur la totalité de la partie de séparation (35) opposée à la partie de joint (52).

4. Unité de lampe arrière selon la revendication 2 ou la revendication 3, dans laquelle un axe (111) du trou d'évent (66) est parallèle à un axe longitudinal (112) d'un véhicule lorsque le véhicule est observé dans un plan, et la base (88) de la partie évidée (53) prévue avec le trou d'évent (66) est inclinée vers l'axe longitudinal (112) lorsque le véhicule est observé sur une vue en plan.

5. Unité de lampe arrière selon la revendication 2, la revendication 3 ou la revendication 4, dans laquelle la partie évidée (53) est formée en s'étendant vers le haut et vers le bas, et le trou d'évent (66) est prévu au-dessus du centre dans une direction de hauteur de la partie évidée (53).

6. Unité de lampe arrière selon l'une quelconque des revendications 2 à 4, dans laquelle la partie évidée (53) présente une forme de L comprenant une partie de rainure longitudinale (77) et une partie de rainure latérale (78) étendue à partir d'une extrémité supérieure de la partie de rainure longitudinale (77) lorsqu'elle est observée depuis l'arrière du véhicule, et le trou d'évent (66) est prévu dans la partie de rainure latérale (78).

7. Unité de lampe arrière selon l'une quelconque des revendications 1 à 4, dans laquelle : la partie de logement de lampe arrière (42) comprend une partie d'extension (67) étendue le long de la face supérieure de la partie de logement de lampe de clignotant (44) ; et
dans l'élément de base (50), la partie d'extension (67) est prévue avec le trou d'évent (66).
